# EUROPEAN PATENT APPLICATION

(11) **EP 2 733 821 A1**
(43) Date of publication of application: **21.05.2014**
(21) Application number: 12192653.9
(22) Date of filing: 14.11.2012
(51) Int. Cl.: H02K 1/14, H02K 7/14, B02C 17/24

(54) **A rotating electrical machine having a segmented stator**

(71) Applicant: GE Energy Power Conversion Technology Ltd, Rugby Warwickshire CV21 1BU (GB)
(72) Inventor: Bradley, Stuart Ian, Lutterworth Leicestershire LE17 5AJ (GB); Alabaster, David, Rugby Warwickshire CV22 7NW (GB)
(74) Representative: Serjeants LLP

(57) **Abstract**

A rotating electrical machine comprises a rotor (10) having an axis of rotation and a stator assembly (14) surrounding the rotor (10). The stator assembly (14) comprises a plurality of circumferentially arranged stator segments (16) and a plurality of link elements (18) of which at least one link element (18) extends between each of the circumferentially adjacent stator segments (16). Each link element (18) provides a rigid circumferential connection between circumferentially adjacent stator segments (16) so that the linked stator segments (16) form a torsionally stiff annular stator and also provides a radially flexible connection between circumferentially adjacent stator segments (16) to permit relative movement between adjacent linked stator segments (16) in the radial direction.

## Description

### TECHNICAL FIELD

The present disclosure relates generally to a rotating electrical machine, and in particular to a rotating electrical machine having a segmented stator. The rotating electrical machine may be a gearless mill drive (GMD) for a grinding mill such as an autogenous (AG) mill or a semi-autogenous (SAG) mill.

### TECHNICAL BACKGROUND

Large diameter, low speed, rotating electrical machines usually employ a rigid stator assembly and grinding mills are one example of this type of rotating electrical machine. Grinding mills are widely used in mineral processing applications and the most common types are the autogenous (AG) grinding mill in which the feed material itself acts as the grinding medium and the semi-autogenous (SAG) grinding mill in which supplementary grinding material, typically steel balls, is added to the feed material.

Grinding mills typically employ a gearless mill drive (GMD), also commonly known as a ring motor, in which the mill barrel acts as the rotor and a stator assembly surrounds the rotor. GMD stator assemblies typically have a segmented construction, with circumferentially adjacent stator segments being rigidly connected to each other.

Grinding mills are often subjected to transient loads in the radial, axial and circumferential directions, particularly during start-up if the material in the mill has settled and formed what is commonly referred to as a 'frozen charge', with translational and torsional shock loads being especially problematic. These transient loads have been known to cause fatigue damage to some of the component parts of the stator assembly of existing gearless mill drives.

There is, therefore, a need for an improved rotating electrical machine, such as a grinding mill, having an improved stator assembly.

### SUMMARY OF THE DISCLOSURE

According to one aspect of the present disclosure, there is provided a rotating electrical machine comprising a rotor having an axis of rotation and a stator assembly surrounding the rotor, the stator assembly comprising:
a plurality of circumferentially arranged stator segments; and
a plurality of link elements of which at least one link element extends between each of the circumferentially adjacent stator segments, wherein each link element provides a rigid circumferential connection between circumferentially adjacent stator segments so that the linked stator segments form a torsionally stiff annular stator and provides a radially flexible connection between circumferentially adjacent stator segments to permit relative movement between adjacent linked stator segments in the radial direction.

The terms 'radial', 'circumferential' and 'axial' are used herein to refer to directions relative to the axis of rotation of the rotor.

The link elements link together the circumferentially arranged stator segments to provide the resulting annular stator with controlled stiffness in the torsional direction so that the linked stator segments effectively form a torsionally stiff annular stator. Because the individual stator segments are capable of moving independently in the radial direction, the annular stator can deflect locally in the event that there is local deflection of the rotor, for example due to translational and/or torsional shock loads. The air gap between the rotor and the individual stator segments is, therefore, locally controlled. Fatigue stresses are also reduced with the result that the fatigue resistance of the stator assembly is improved. In addition, the segmented stator assembly has a lightweight construction and is easy to assemble on-site.

The link elements may be secured to axial faces of the stator segments. A first link element may extend between first axial faces of circumferentially adjacent stator segments and a second link element any extend between second axial faces of circumferentially adjacent stator segments. The axial faces may comprise axial face plates located on each stator segment.

The link elements may be elongate and each link element may extend in the circumferential direction between circumferentially adjacent stator segments. The link elements may, for example, comprise linear struts.

Opposite ends of each link element may be secured to circumferentially adjacent stator segments for pivotal movement about an axis parallel to said axis of rotation. This permits the relative movement between circumferentially adjacent linked stator segments in the radial direction.

In one embodiment, the circumferentially opposing faces of circumferentially adjacent stator segments may be spaced from each other. This may facilitate independent movement of each individual stator segment relative to the circumferentially adjacent stator segments. In another embodiment, the circumferentially opposing faces of circumferentially adjacent stator segments may contact each other. In this case, it may be advantageous if the one or more link elements extending between the circumferentially adjacent stator segments apply a preload to the contacting surfaces.

The circumferentially opposing faces of circumferentially adjacent stator segments can include a low friction material to facilitate sliding contact in the radial direction. This is particularly advantageous in embodiments in which the circumferentially opposing faces of circumferentially adjacent stator segments are in contact with each other.

Each stator segment may include at least one rolling element which may cooperate with the rotor. This ensures that each stator segment is individually guided relative to the rotor, during rotation of the rotor. One or more of said rolling elements may be provided at the circumferentially opposite ends of each axial face of each stator segment. Each stator segment is advantageously supported on the rotor by four rolling elements, one at each corner, for maximum stability.

The rotor may include a circumferentially extending guide arrangement with which the rolling elements may cooperate. The guide arrangement axially constrains each of the plurality of stator segments. Two axially spaced circumferentially extending guide arrangements are desirably provided. The or each guide arrangement may comprise a guide rail.

A mounting arrangement may be provided between at least one of the stator segments and a base structure to mount the stator assembly on the base structure.

The rotor may be a hollow rotatable body. The rotating electrical machine may be a gearless mill drive in which the hollow rotatable body is a mill barrel.

### BRIEF DESCRIPTION OF THE DRAWINGS

Figure 1 is a diagrammatic perspective illustration of part of a rotating electrical machine according to the present invention;
Figure 2 is a side elevation of the electrical machine illustrated in Figure 1;
Figure 3 is a diagrammatic perspective illustration of a first implementation of the electrical machine illustrated in Figures 1 and 2 in the form of a grinding mill;
Figure 4 is a side elevation of the grinding mill illustrated in Figure 3;
Figure 5 is a detail view of the region 'A' illustrated in Figure 4;
Figure 6 is a diagrammatic perspective illustration of a second implementation of the electrical machine illustrated in Figures 1 and 2, again in the form of a grinding mill;
Figure 7 is a side elevation of the grinding mill illustrated in Figure 6; and
Figure 8 is a detail view of the region 'B' illustrated in Figure 7.

### DETAILED DESCRIPTION OF EMBODIMENTS

Embodiments will now be described by way of example only and with reference to the accompanying drawings.

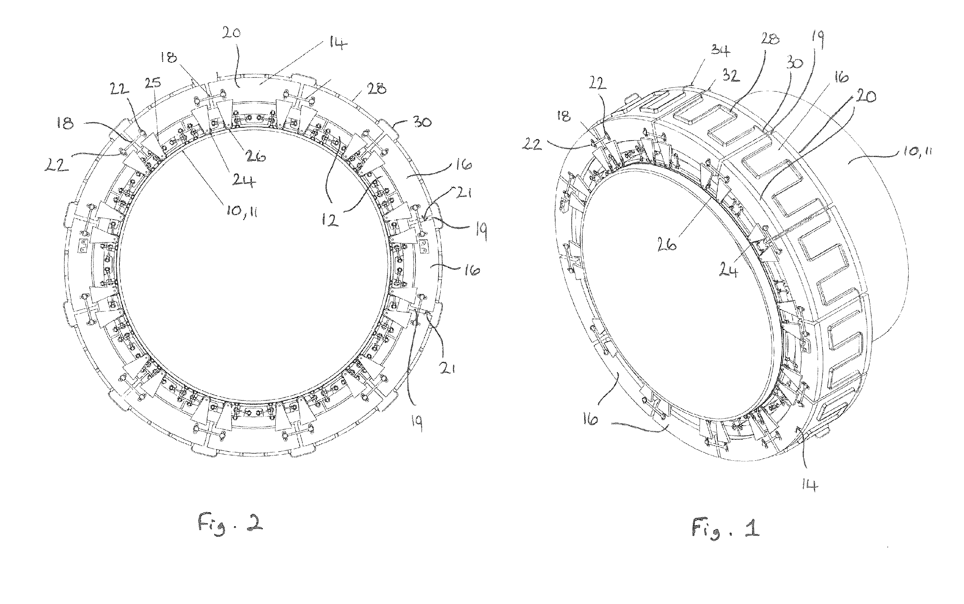

Referring initially to Figures 1 and 2, a rotating electrical machine comprises a rotor 10 in the form of a hollow rotatable body 11 and having an axis of rotation. A plurality of pole bodies 12 are mounted at circumferentially spaced positions around the rotor 10. In the illustrated embodiment, the pole bodies 12 are mounted on the rotor 10 by a pole mounting arrangement as described in European patent application 12000680.4. The pole bodies 12 could, however, be mounted on the rotor 10 by any suitable mounting arrangement.

A plurality of permanent magnets (not shown) are affixed to an upper, and in use radially outer, surface of the pole bodies 12, for example by bonding, by way of mechanical fixings or by any other suitable means. Alternatively, the permanent magnets could be located in a housing which could be secured to the upper, and in use radially outer, surface of the pole bodies 12.

A stator assembly 14 surrounds the rotor 10 and comprises a plurality of circumferentially arranged stator segments 16. Each stator segment 16 is mechanically connected to a circumferentially adjacent stator segment 16 by a pair of axially spaced link elements 18 (note that only one link element 18 of each pair is visible in the drawings) so that the circumferentially arranged stator segments 16 together form a torsionally stiff annular stator which surrounds the rotor 10. Each link element 18 comprises a linear strut which acts as a tie rod when under tensile stress and as a bracing strut when under compressive stress, thereby providing the aforesaid torsional rigidity. The circumferential faces 21 of the stator segments 16 are spaced from each other in the illustrated embodiment so that a small gap 19 is formed between adjacent stator segments 16.

In the illustrated embodiment, each stator segment 16 includes stator face plates 20 to which the link elements 18 are secured. Bushes 22 are provided at the opposite ends of each link element 18 and these provide flexibility in the radial direction by mounting the opposite ends of each link element 18 for movement about a pivot axis which is parallel to the axis of rotation of the rotor 10. The flexible bushes 22 thus enable circumferentially adjacent linked stator segments 16 to move relative to each other in the radial direction. The bushes 22 may also provide some limited flexibility in the axial direction, thereby permitting circumferentially adjacent linked stator segments 16 to move relative to each other by a limited amount in the axial direction.

Each of the stator segments 16 includes a plurality of rolling elements 24 in the form of wheels which cooperate with guide rails 26 that extend circumferentially around the rotor 10. The stator segments 16 are thus individually guided relative to the rotor 10 by virtue of the wheel/rail interaction and because the link elements 18 allow the stator segments 16 to move independently in the radial direction, the individual stator segments 16 can follow any local deflections of the rotor 10, allowing the air gap between the rotor 10 and individual stator segments 16 to be controlled and maintained during operation of the rotating electrical machine. In the illustrated embodiment, a pair of axially spaced wheels 24 mounted on radially inwardly projecting wheel support brackets 25 is provided at circumferentially opposite ends of the stator face plates 20 of each stator segment 16, so that each stator segment 16 is supported by four rolling elements 24 (note that only one rolling element 24 and wheel support bracket 25 of each pair is visible in the drawings). The guide rails 26 also constrain the axial movement of each of the stator segments 16, although some limited axial movement may occur and can be accommodated by the bushes 16 as discussed above.

A cooling duct 28 is provided on the radially outer surface of each stator segment 16 and a flexible conduit 30 such as a hose connects the cooling ducts 28 of adjacent stator segments 16. The cooling ducts 28 and flexible connecting conduits 30 carry a flow of cooling fluid across the radially outer surface of the stator segments 16 between a cooling fluid inlet 32 and a cooling fluid outlet 34.

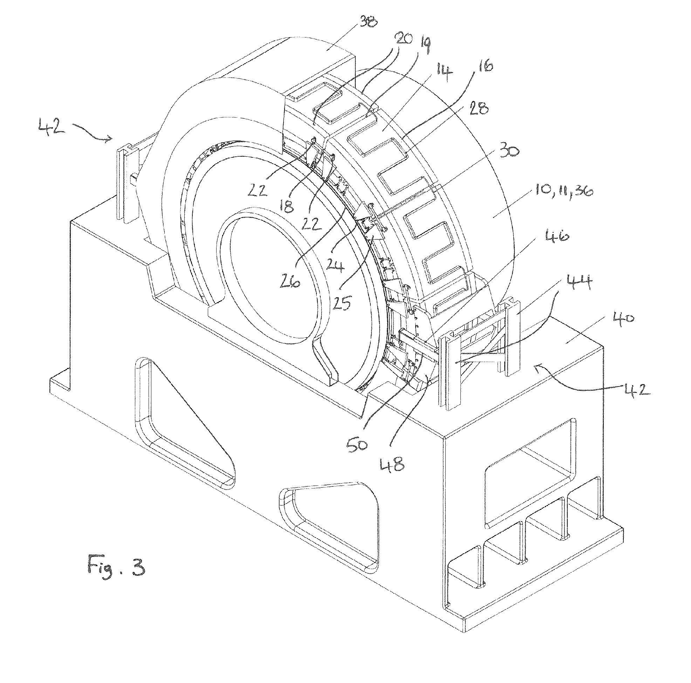

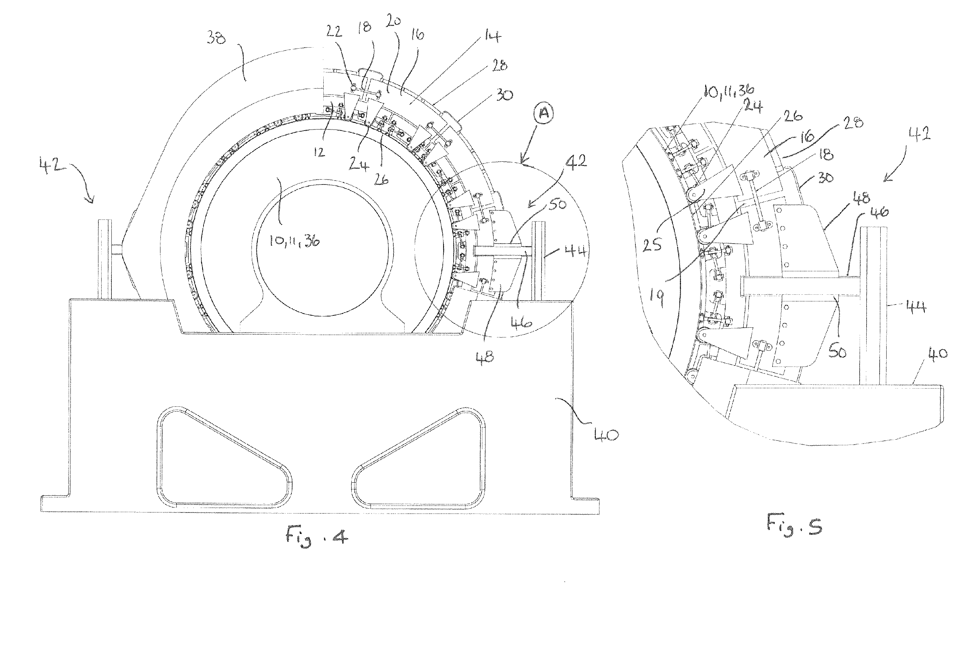

Referring now to Figures 3 to 5, there is shown an implementation of the rotating electrical machine of Figures 1 and 2 in the form of a grinding mill having a gearless mill drive (GMD). The grinding mill comprises a hollow rotatable mill barrel 36 in which feed material is ground during rotation of the mill barrel 36. The mill barrel 36 acts as the rotor 10 and is surrounded by the stator assembly 14, both the rotor 10 and stator assembly 14 being as described above with reference to Figures 1 and 2. The grinding mill includes a stator cover 38, only part of which is illustrated in Figures 3 and 4, and the stator assembly 14 is mounted on a base structure 40 via two circumferentially oppositely located support arrangements 42. Each support arrangement 42 includes a pair of axially spaced cross-braced vertical support legs 44 carrying a pair of axially spaced support arms 46 which project in a radially inward direction towards the axis of rotation of the mill barrel 36. Each support arrangement 42 further includes a support plate 48 which is rigidly connected to the stator segment 16 circumferentially aligned with the support arrangement 42. The support plate 48 includes axially spaced slots 50 in which the support arms 46 are slidably accommodated. The ability of the support arms 46 to slide in the slots 50 ensures that radial movement of the stator segments 16 that are circumferentially aligned with the support arrangements 42 are not impeded and thus that the radial motion of the stator assembly 14 is decoupled from the base structure 40. Relative circumferential movement between the stator segments 16 and the respective support arrangements 42 is, however, prevented.

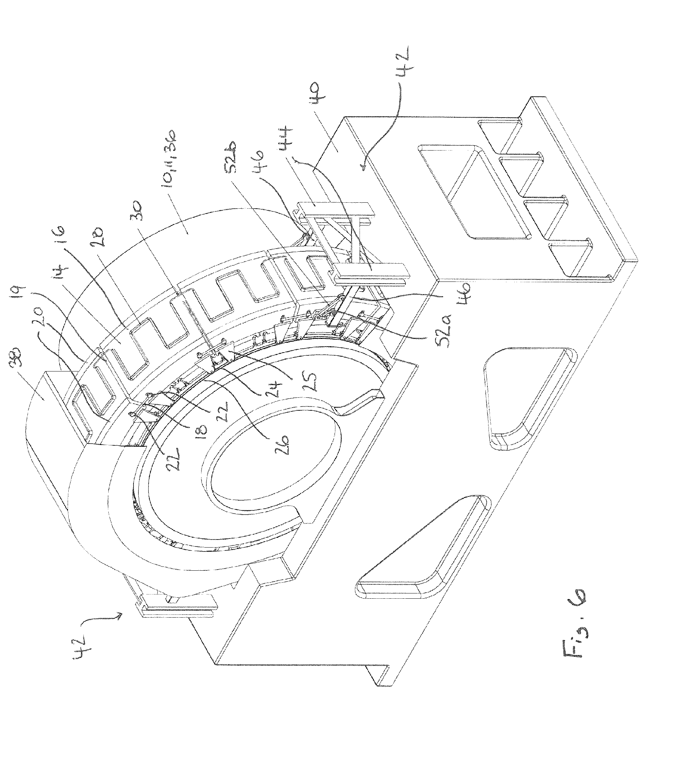

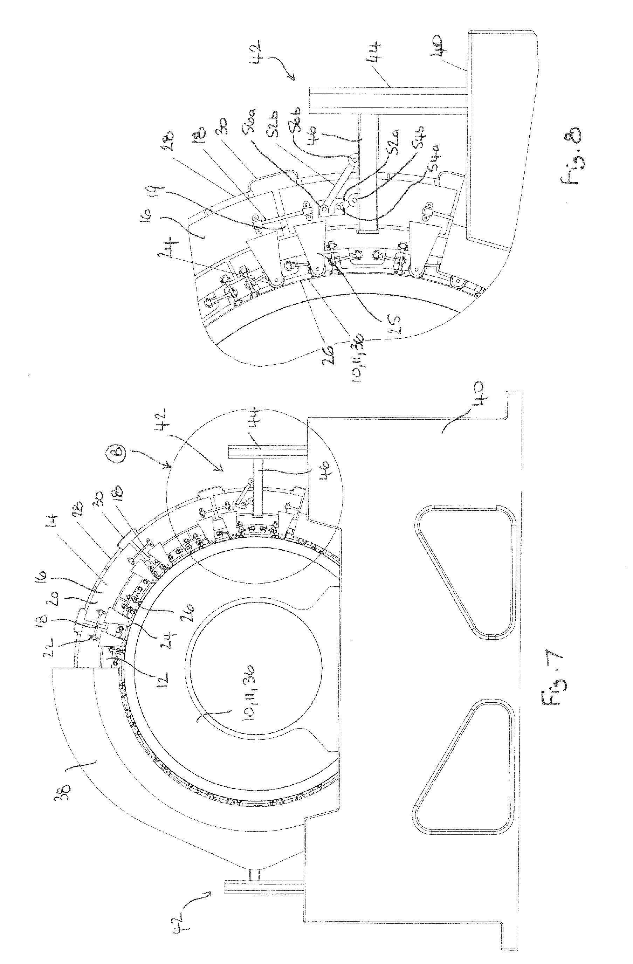

Referring now to Figures 6 to 8, there is shown an alternative implementation of the rotating electrical machine of Figures 1 and 2, again in the form of a grinding mill having a gearless mill drive (GMD).

In the grinding mill of Figures 6 to 8, the stator assembly 14 is again mounted on a base structure 40 via two circumferentially oppositely located support arrangements 42, each including a pair of axially spaced cross-braced vertical support legs 44 carrying a pair of axially spaced support arms 46 which project in a radially inward direction towards the axis of rotation of the mill barrel 36. A sliding support plate is not, however, used. Instead, pairs of axially spaced hinged support links 52a, 52b extend between hinged connection points 54a, 56a on the stator segment 16 and hinged connection points 54b, 56b on the support arm 46.

The arrangement of the hinged support links 52a, 52b and hinged connection points enables the stator segments 16 that are circumferentially aligned with the support arrangements 42 to move in the radial direction relative to the support arrangements 42 but not in the circumferential direction, thus decoupling the radial motion of the stator assembly 14 from the base structure 40.

Although exemplary embodiments have been described in the preceding paragraphs, it should be understood that various modifications may be made to those embodiments without departing from the scope of the appended claims. Thus, the breadth and scope of the claims should not be limited to the above-described exemplary embodiments. Each feature disclosed in the specification, including the claims and drawings, may be replaced by alternative features serving the same, equivalent or similar purposes, unless expressly stated otherwise.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. A rotating electrical machine comprising a rotor (10) having an axis of rotation and a stator assembly (14) surrounding the rotor (10), the stator assembly (14) comprising:
a plurality of circumferentially arranged stator segments (16); and
a plurality of link elements (18) of which at least one link element (18) extends between each of the circumferentially adjacent stator segments (16), wherein each link element (18) provides a rigid circumferential connection between circumferentially adjacent stator segments (16) so that the linked stator segments form a torsionally stiff annular stator and provides a radially flexible connection between circumferentially adjacent stator segments (16) to permit relative movement between adjacent linked stator segments in the radial direction.

2. A rotating electrical machine according to claim 1, wherein the link elements (18) are secured to axial faces (20) of the stator segments.

3. A rotating electrical machine according to claim 1 or claim 2, wherein the link elements (18) are elongate and each link element (18) extends in the circumferential direction between circumferentially adjacent stator segments (16).

4. A rotating electrical machine according to any preceding claim, wherein the opposite ends of each link element (18) are secured to circumferentially adjacent stator segments (16) for pivotal movement about an axis parallel to said axis of rotation to permit relative movement between circumferentially adjacent linked stator segments in the radial direction.

5. A rotating electrical machine according to any preceding claim, wherein the circumferentially opposing faces (21) of circumferentially adjacent stator segments (16) are spaced from each other.

6. A rotating electrical machine according to any of claims 1 to 4, wherein the circumferentially opposing faces (21) of circumferentially adjacent stator segments (16) contact each other.

7. A rotating electrical machine according to any preceding claim, wherein the circumferentially opposing faces (21) of circumferentially adjacent stator segments include a low friction material to facilitate sliding contact in the radial direction.

8. A rotating electrical machine according to any preceding claim, wherein each stator segment (16) includes at least one rolling element (24) which cooperates with the rotor (10) to individually guide each stator segment (16) relative to the rotor (10) during rotation of the rotor (10).

9. A rotating electrical machine according to claim 8, wherein one or more of said rolling elements (24) is provided at circumferentially opposite ends of each axial face (21) of each stator segment (16).

10. A rotating electrical machine according to claim 8 or claim 9, wherein the rotor (10) includes a circumferentially extending guide arrangement (26) with which the rolling elements (24) cooperate.

11. A rotating electrical machine according to claim 10, wherein the guide arrangement (26) comprises a guide rail.

12. A rotating electrical machine according to claim 10 or claim 11, wherein the guide arrangement (26) axially constrains each of the plurality of stator segments (16).

13. A rotating electrical machine according to any preceding claim, wherein a support arrangement (42) is provided between at least one of the stator segments (16) and a base structure (40) to mount the stator assembly (14) on the base structure (40).

14. A rotating electrical machine according to any preceding claim, wherein the rotor (10) is a hollow rotatable body (11).

15. A rotating electrical machine according to any preceding claim, wherein the rotating electrical machine is a gearless mill drive in which the hollow rotatable body (11) is a mill barrel (36).
